(19) Europäisches Patentamt
European Patent Office
Office européen des brevets

(11) EP 3 079 426 A1

(12) EUROPEAN PATENT APPLICATION
published in accordance with Art. 153(4) EPC

(43) Date of publication:
12.10.2016 Bulletin 2016/41

(51) Int Cl.:
$H04W\ 72/12^{(2009.01)}$

(21) Application number: 13900162.2

(86) International application number:
PCT/CN2013/090466

(22) Date of filing: 25.12.2013

(87) International publication number:
WO 2015/096073 (02.07.2015 Gazette 2015/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• WANG, Zongjie
Shenzhen
Guangdong 518129 (CN)

• ZHANG, Peng
Shenzhen
Guangdong 518129 (CN)
• WANG, Zengxin
Hefei
Anhui 230052 (CN)
• QIU, Ling
Hefei
Anhui 230052 (CN)

(74) Representative: Pfenning, Meinig & Partner mbB
Patent- und Rechtsanwälte
Joachimsthaler Straße 12
10719 Berlin (DE)

(54) METHOD AND APPARATUS FOR ALLOCATING UPLINK RESOURCE, AND MACRO BASE STATION

(57) The present invention provides a method, an apparatus, and a system for allocating an uplink resource, and a macro base station. A macro base station classifies user equipment into a first user equipment group or a second user equipment group according to a measurement report reported by the user equipment, and allocates, based on a proportion of a quantity of user equipments in the first user equipment group to a quantity of user equipments in the second user equipment group, uplink data transmission subframes to the user equipments in the first user equipment group and the user equipments in the second user equipment group. In this way, a macro base station classifies uplink user equipment that interferes with a micro cell into a second user equipment group, and deliberately allocates some subframes of uplink data transmission subframes to the second user equipment group, so that the uplink user equipment, which produces interference, of the macro base station does not occupy a resource of uplink user equipment of a micro base station, thereby improving overall performance of the uplink user equipment of the micro base station.

FIG. 4

**Description**

**TECHNICAL FIELD**

The present invention relates to the communications field, and in particular, to a method and an apparatus for allocating an uplink resource, and a macro base station.

**BACKGROUND**

To satisfy an increasingly huge demand of people for wireless data traffic, an operator arranges a large quantity of low-power access points such as a micro cell, a pico cell, and a femto cell in a macro cell, reuses an existing spectrum resource in a macro base station, to form a heterogeneous network (HetNet) that is based on a same access technology but has a different coverage area, thereby obviously improving a throughput of a wireless communications system.

In the HetNet, a user selects a cell according to downlink measured signal strength. Because a transmit power of a micro base station is much lower than a transmit power of the macro base station, the micro base station has a much smaller coverage area. Therefore, in a UMTS (Universal Mobile Telecommunications System, Universal Mobile Telecommunications System) or an LTE (Long Term Evolution, Long Term Evolution) system, a power control technology is used, so that a user far away from the base station needs a relatively high transmit power to compensate for a path loss and impact of a "near-far effect". Therefore, if user equipment, at an edge of a micro cell, of a macro base station is far away from the macro base station, the user equipment of the macro base station uses a relatively high uplink transmit power, and the user equipment of the macro base station produces, during uplink data transmission, severe uplink interference to a micro cell near the user equipment and therefore, uplink capacity of a micro base station is reduced.

**SUMMARY**

The present invention provides a method and an apparatus for allocating an uplink resource, and a macro base station, to resolve a technical problem in the prior art that user equipment of a macro base station produces, during uplink data transmission, severe uplink interference to a micro cell near the user equipment and therefore, uplink capacity of a micro base station is reduced.

According to a first aspect, the present invention provides an apparatus for allocating an uplink resource, including: a measurement report acquiring module, configured to acquire a measurement report reported by user equipment; and a user equipment grouping module, configured to classify the user equipment into a first user equipment group or a second user equipment group according to the measurement report, where interference of user equipment that is in the first user equipment group to a micro cell is less than interference of user equipment that is in the second user equipment group to the micro cell; and an uplink resource allocation module, configured to allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

With reference to the first aspect, in a first possible implementation manner, the user equipment grouping module specifically includes: a micro cell determining module, configured to: after the user equipment grouping module classifies the user equipment into the second user equipment group, separately determine, according to a measurement report reported by each user equipment in the second user equipment group, a micro cell corresponding to each user equipment, where each user equipment is located at an edge of one or more micro cells; and a small-group grouping module, configured to separately classify each user equipment into a corresponding small group in the second user equipment group according to the micro cell corresponding to each user equipment, where the micro cell corresponding to each user equipment corresponds to one small group in the group.

With reference to the first possible implementation manner, in a second possible implementation manner, the small-group grouping module is specifically configured to separately classify each user equipment into a normal small group in the second user equipment group according to the micro cell corresponding to each user equipment, where there is a one-to-one correspondence between the normal small group and the micro cell corresponding to each user equipment.

With reference to the first possible implementation manner, in a third possible implementation manner, the small-group grouping module is specifically configured to: if any user equipment in the second user equipment group is located at an edge of only a single micro cell, classify the any user equipment into a normal small group in the second user equipment group, where there is a one-to-one correspondence between the normal small group and the single micro cell; or if the any user equipment is located at edges of at least two micro cells, classify the any user equipment into a particular small group corresponding to the at least two micro cells, where the particular small group is a small group other than the normal small group.

With reference to the third possible implementation manner, in a fourth possible implementation manner, the user equipment grouping module further includes: a small-group optimization module, configured to: after the small-group grouping module classifies the any user equipment into the particular small group corresponding to the at least two micro cells, if the particular small group includes only one user equipment, classify the user equipment in the particular small group into a normal small group that corresponds to any micro cell of the at least two micro cells, and delete the particular small group.

With reference to any one of the second possible implementation manner to the fourth possible implementation manner, in a fifth possible implementation manner, the small-group optimization module is further configured to: after the small-group grouping module classifies the user equipment into the corresponding normal small group in the second user equipment group, if a unit small group including only one user equipment exists in the normal small group, classify the user equipment in the unit small group into the first user equipment group, and delete the unit small group.

With reference to any one of the first possible implementation manner to the fifth possible implementation manner, in a sixth possible implementation manner, the uplink resource allocation module specifically includes: a small-group resource allocation module, configured to: after the uplink resource allocation module allocates the uplink data transmission subframes to the user equipments in the first user equipment group and the user equipments in the second user equipment group, allocate, according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

With reference to any one of the first aspect to the sixth possible implementation manner, in a seventh possible implementation manner, the measurement report is obtained through measurement by the user equipment according to a measurement configuration and is reported by the user equipment, and the measurement configuration carries information about a first intra-frequency measurement report event and information about a second intra-frequency measurement report event; when a pilot signal of a micro cell corresponding to the user equipment becomes good, the micro cell triggers the first intra-frequency measurement report event; and when the pilot signal of the micro cell becomes poor, the micro cell triggers the second intra-frequency measurement report event.

With reference to the seventh possible implementation manner, in an eighth possible implementation manner, the user equipment grouping module is specifically configured to: if the measurement report reported by the user equipment is reported by means of triggering of the first intra-frequency measurement report event, classify the user equipment into the second user equipment group; or if the measurement report reported by the user equipment is reported by means of triggering of the second intra-frequency measurement report event, compare a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classify the user equipment into the second user equipment group; or when the quantity of corresponding micro cells that are before the user equipment performs measurement is equal to the quantity of micro cells that trigger the second intra-frequency measurement report event, classify the user equipment into the first user equipment group.

With reference to any one of the first aspect to the eighth possible implementation manner, in a ninth possible implementation manner, the user equipment grouping module is further configured to: before the user equipment is classified into the first user equipment group or the second user equipment group according to the measurement report reported by the user equipment, and before the measurement report that is reported by the user equipment for the first time is received, classify the user equipment into the first user equipment group.

With reference to any one of the seventh possible implementation manner to the ninth possible implementation manner, in a tenth possible implementation manner, the measurement report acquiring module is specifically configured to deliver the measurement configuration to the user equipment, and is further configured to receive the measurement report that is obtained through measurement by the user equipment based on the measurement configuration and that is reported when the micro cell corresponding to the user equipment triggers the first intra-frequency measurement report event or the second intra-frequency measurement report event.

With reference to any one of the seventh possible implementation manner to the ninth possible implementation manner, in the tenth possible implementation manner, the measurement report acquiring module is specifically configured to receive the measurement report, forwarded by a radio network controller, of the user equipment, where the measurement report is obtained through measurement by the user equipment according to the measurement configuration delivered by the radio network controller and is reported to the radio network controller when the micro cell corresponding to the user equipment triggers the first intra-frequency measurement report event or the second intra-frequency measurement report event.

According to a second aspect, the present invention provides a macro base station, including: a receiver, configured to receive a measurement report reported by user equipment; and a processor, configured to classify the user equipment into a first user equipment group or a second user equipment group according to the measurement report reported by the user equipment, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and further configured to allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

With reference to the second aspect, in a first possible implementation manner, the processor is further configured to: after classifying the user equipment into the second user equipment group, separately determine, according to a measurement report reported by each user equipment in the second user equipment group, a micro cell corresponding to each user equipment, where each user equipment is located at an edge of one or more micro cells; and separately classify each user equipment into a corresponding small group in the second user equipment group according to the micro cell corresponding to each user equipment, where the micro cell corresponding to each user equipment corresponds to one small group in the group.

With reference to the first possible implementation manner, in a second possible implementation manner, the processor is specifically configured to separately classify each user equipment into a normal small group in the second user equipment group according to the micro cell corresponding to each user equipment, where there is a one-to-one correspondence between the normal small group and the micro cell corresponding to each user equipment.

With reference to the first possible implementation manner, in a third possible implementation manner, the processor is specifically configured to: if any user equipment in the second user equipment group is located at an edge of only a single micro cell, classify the any user equipment into a normal small group in the second user equipment group, where there is a one-to-one correspondence between the normal small group and the single micro cell; or if the any user equipment is located at edges of at least two micro cells, classify the any user equipment into a particular small group corresponding to the at least two micro cells, where the particular small group is a small group other than the normal small group.

With reference to the third possible implementation manner, in a fourth possible implementation manner, the processor is further configured to: after classifying the any user equipment into the particular small group corresponding to the at least two micro cells, if the particular small group includes only one user equipment, classify the user equipment in the particular small group into a normal small group that corresponds to any micro cell of the at least two micro cells, and delete the particular small group.

With reference to any one of the second possible implementation manner to the fourth possible implementation manner, in a fifth possible implementation manner, the processor is further configured to: after classifying the user equipment into the corresponding normal small group in the second user equipment group, if a unit small group including only one user equipment exists in the normal small group, classify the user equipment in the unit small group into the first user equipment group, and delete the unit small group.

With reference to any one of the first possible implementation manner to the fifth possible implementation manner, in a sixth possible implementation manner, the processor is further configured to: after allocating the uplink data transmission subframes to the user equipments in the first user equipment group and the user equipments in the second user equipment group, allocate, according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

With reference to any one of the second aspect to the sixth possible implementation manner, in a seventh possible implementation manner, the measurement report is obtained through measurement by the user equipment according to a measurement configuration and is reported by the user equipment, and the measurement configuration carries information about a first intra-frequency measurement report event and information about a second intra-frequency measurement report event; when a pilot signal of a micro cell corresponding to the user equipment becomes good, the micro cell triggers the first intra-frequency measurement report event; and when the pilot signal of the micro cell becomes poor, the micro cell triggers the second intra-frequency measurement report event.

With reference to the seventh possible implementation manner, in an eighth possible implementation manner, the processor is specifically configured to: if the measurement report reported by the user equipment is reported by means of triggering of the first intra-frequency measurement report event, classify the user equipment into the second user equipment group; or if the measurement report reported by the user equipment is reported by means of triggering of the second intra-frequency measurement report event, compare a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classify the user equipment into the second user equipment group; or when the quantity of corresponding micro cells that are before the user equipment performs measurement is equal to the quantity of micro cells that trigger the second intra-frequency measurement report event, classify the user equipment into the first user equipment group.

With reference to any one of the second aspect to the eighth possible implementation manner, in a ninth possible implementation manner, the processor is further configured to: before the user equipment is classified into the first user equipment group or the second user equipment group according to the measurement report reported by the user equipment, and before the measurement report reported by the user equipment is received, classify the user equipment into the first user equipment group.

With reference to any one of the seventh possible implementation manner to the ninth possible implementation manner, in a tenth possible implementation manner, the macro base station further includes: a sender, configured to deliver the measurement configuration to the user equipment, so that the user equipment can perform measurement based on the measurement configuration, and report the measurement report when the micro cell corresponding to the user equipment triggers the first intra-frequency measurement report event or the second intra-frequency measurement report event.

With reference to any one of the seventh possible implementation manner to the ninth possible implementation manner, in the tenth possible implementation manner, the receiver is specifically configured to: before the user equipment is classified into the first user equipment group or the second user equipment group according to the measurement report reported by the user equipment, receive the measurement report, forwarded by a radio network controller, of the user equipment, where the measurement report is obtained through measurement by the user equipment according to the measurement configuration delivered by the radio network controller and is reported to the radio network controller when the micro cell corresponding to the user equipment triggers the first intra-frequency measurement report event or the second intra-frequency measurement report event.

According to a third aspect, the present invention provides a radio network controller, including: a sender, configured to deliver a measurement configuration to user equipment, where the measurement configuration carries information about a first intra-frequency measurement report event and information about a second intra-frequency measurement report event, when a pilot signal of a micro cell corresponding to the user equipment becomes good, the micro cell triggers the first intra-frequency measurement report event, and when the pilot signal of the micro cell becomes poor, the micro cell triggers the second intra-frequency measurement report event; and further configured to forward, to a macro base station, a measurement report that is obtained through measurement by the user equipment according to the measurement configuration and that is reported by the user equipment; and a receiver, configured to receive the measurement report.

With reference to the third aspect, in a first possible implementation manner, the sender is further configured to: after the receiver receives the measurement report, notify, according to the measurement report, first user equipment reporting the first intra-frequency measurement report event that before a first micro cell triggering the first intra-frequency measurement report event triggers the second intra-frequency measurement report event of the first user equipment, the first micro cell does not trigger the first intra-frequency measurement report event of the first user equipment any more; or notify second user equipment reporting the second intra-frequency measurement report event that before a second micro cell triggering the second intra-frequency measurement report event triggers the first intra-frequency measurement report event of the second user equipment, the second micro cell does not trigger the second intra-frequency measurement report event of the second user equipment any more.

According to a fourth aspect, the present invention provides user equipment, including: a receiver, configured to receive a measurement configuration delivered from a network side, where the measurement configuration carries information about a first intra-frequency measurement report event and information about a second intra-frequency measurement report event, when a pilot signal of a micro cell corresponding to the user equipment becomes good, the micro cell triggers the first intra-frequency measurement report event, and when the pilot signal of the micro cell becomes poor, the micro cell triggers the second intra-frequency measurement report event; and a sender, configured to: when measurement is performed according to the measurement configuration, and a micro cell triggers the first intra-frequency measurement report event and/or the second intra-frequency measurement report event, report a measurement report to the network side.

According to a fifth aspect, the present invention provides a method for allocating an uplink resource, including: acquiring, by a macro base station, a measurement report reported by user equipment; classifying, by the macro base station, the user equipment into a first user equipment group or a second user equipment group according to the measurement report, where interference of user equipment that is in the first user equipment group to a micro cell is less than interference of user equipment that is in the second user equipment group to the micro cell; and allocating, by the macro base station within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

With reference to the fifth aspect, in a first possible implementation manner, after the classifying, by the macro base station, the user equipment into a second user equipment group, the method further includes: separately determining, by the macro base station according to a measurement report reported by each user equipment in the second user equipment group, a micro cell corresponding to each user equipment, where each user equipment is located at an edge of one or more micro cells; and separately classifying, by the macro base station, each user equipment into a corresponding small group in the second user equipment group according to the micro cell corresponding to each user equipment, where the micro cell corresponding to each user equipment corresponds to one small group in the group.

With reference to the first possible implementation manner, in a second possible implementation manner, the separately classifying, by the macro base station, each user equipment into a small group in the second user equipment group according to the micro cell corresponding to each user equipment specifically includes: separately classifying, by the macro base station, each user equipment into a normal small group in the second user equipment group according to the micro cell corresponding to each user equipment, where there is a one-to-one correspondence between the normal small group and the micro cell corresponding to each user equipment.

With reference to the first possible implementation manner, in a third possible implementation manner, the separately classifying, by the macro base station, each user equipment into a small group in the second user equipment group according to the micro cell corresponding to each user equipment specifically includes: if any user equipment in the second user equipment group is located at an edge of only a single micro cell, classifying, by the macro base station, the any user equipment into a normal small group in the second user equipment group, where there is a one-to-one correspondence between the normal small group and the single micro cell; or if the any user equipment is located at edges of at least two micro cells, classifying, by the macro base station, the any user equipment into a particular small group corresponding to the at least two micro cells, where the particular small group is a small group other than the normal small group.

With reference to the third possible implementation manner, in a fourth possible implementation manner, after the classifying, by the macro base station, the any user equipment into a particular small group in the second user equipment group, the method further includes: if the particular small group corresponding to the at least two micro cells includes only one user equipment, classifying, by the macro base station, the user equipment in the particular small group into a normal small group that corresponds to any micro cell of the at least two micro cells, and deleting the particular small group.

With reference to any one of the second possible implementation manner to the fourth possible implementation manner, in a fifth possible implementation manner, after the classifying, by the macro base station, the user equipment into a corresponding normal small group in the second user equipment group, the method further includes: if a unit small group including only one user equipment exists in the normal small group, classifying, by the macro base station, the user equipment in the unit small group into the first user equipment group, and deleting the unit small group.

With reference to any one of the first possible implementation manner to the fifth possible implementation manner, in a sixth possible implementation manner, after the allocating, by the macro base station, uplink data transmission subframes to the user equipments in the first user equipment group and the user equipments in the second user equipment group, the method further includes: allocating, by the macro base station according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

With reference to any one of the fifth aspect to the sixth possible implementation manner, in a seventh possible implementation manner, the measurement report is obtained through measurement by the user equipment according to a measurement configuration and is reported by the user equipment, and the measurement configuration carries information about a first intra-frequency measurement report event and information about a second intra-frequency measurement report event; when a pilot signal of a micro cell corresponding to the user equipment becomes good, the micro cell triggers the first intra-frequency measurement report event; and when the pilot signal of the first micro cell becomes poor, the micro cell triggers the second intra-frequency measurement report event.

With reference to the seventh possible implementation manner, in an eighth possible implementation manner, the classifying, by the macro base station, the user equipment into a first user equipment group or a second user equipment group according to the measurement report specifically includes: if the measurement report reported by the user equipment is reported by means of triggering of the first intra-frequency measurement report event, classifying, by the macro base station, the user equipment into the second user equipment group; or if the measurement report reported by the user equipment is reported by means of triggering of the second intra-frequency measurement report event, comparing, by the macro base station, a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classifying, by the macro base station, the user equipment into the second user equipment group; or when the quantity of corresponding micro cells that are before the user equipment performs measurement is equal to the quantity of micro cells that trigger the second intra-frequency measurement report event, classifying, by the macro base station, the user equipment into the first user equipment group.

With reference to any one of the fifth aspect to the eighth possible implementation manner, in a ninth possible implementation manner, before the classifying, by the macro base station, the user equipment into a first user equipment group or a second user equipment group according to the measurement report reported by the user equipment, the method further includes: before acquiring the measurement report reported by the user equipment, classifying, by the macro base station, the user equipment into the first user equipment group.

With reference to any one of the seventh possible implementation manner to the ninth possible implementation manner, in a tenth possible implementation manner, the acquiring, by a macro base station, a measurement report reported by user equipment includes: delivering, by the macro base station, the measurement configuration to the user equipment; and receiving, by the macro base station, the measurement report that is obtained through measurement by the user equipment based on the measurement configuration and that is reported when the micro cell corresponding to the user equipment triggers the first intra-frequency measurement report event or the second intra-frequency measurement report event.

With reference to any one of the seventh possible implementation manner to the ninth possible implementation manner, in the tenth possible implementation manner, the acquiring, by a macro base station, a measurement report reported by user equipment includes: receiving, by the macro base station, the measurement report, forwarded by a radio network controller, of the user equipment, where the measurement report is obtained through measurement by the user equipment according to the measurement configuration delivered by the radio network controller and is reported to the radio network controller when the micro cell corresponding to the user equipment triggers the first intra-frequency measurement report event or the second intra-frequency measurement report event.

According to a sixth aspect, the present invention provides a system for allocating an uplink resource, including: a radio network controller, configured to deliver a measurement configuration to user equipment, and further configured to receive a measurement report reported by the user equipment, and forward the measurement report to a macro base station, where the measurement report is reported by the user equipment when a micro cell corresponding to the user equipment triggers the first intra-frequency measurement report event or the second intra-frequency measurement report event; and the macro base station is configured to classify the user equipment into a first user equipment group or a second user equipment group according to the measurement report from the radio network controller, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

With reference to the sixth aspect, in a first possible implementation manner, the macro base station is further configured to: after classifying the user equipment into the second user equipment group, separately determine, according to a measurement report reported by each user equipment in the second user equipment group, a micro cell corresponding to each user equipment, where each user equipment is located at an edge of one or more micro cells; and separately classify each user equipment into a corresponding small group in the second user equipment group according to the micro cell corresponding to each user equipment, where the micro cell corresponding to each user equipment corresponds to one small group in the group.

With reference to the first possible implementation manner, in a second possible implementation manner, the macro base station is specifically configured to separately classify each user equipment into a normal small group in the second user equipment group according to the micro cell corresponding to each user equipment, where there is a one-to-one correspondence between the normal small group and the micro cell corresponding to each user equipment.

With reference to the first possible implementation manner, in a third possible implementation manner, the macro base station is specifically configured to: if any user equipment in the second user equipment group is located at an edge of only a single micro cell, classify the any user equipment into a normal small group in the second user equipment group, where there is a one-to-one correspondence between the normal small group and the single micro cell; or if the any user equipment is located at edges of at least two micro cells, classify the any user equipment into a particular small group corresponding to the at least two micro cells, where the particular small group is a small group other than the normal small group.

With reference to the third possible implementation manner, in a fourth possible implementation manner, the macro base station is further configured to: after classifying the any user equipment into the particular small group corresponding to the at least two micro cells, if the particular small group includes only one user equipment, classify the user equipment in the particular small group into a normal small group that corresponds to any micro cell of the at least two micro cells, and delete the particular small group.

With reference to any one of the second possible implementation manner to the fourth possible implementation manner, in a fifth possible implementation manner, the macro base station is further configured to: after classifying the user equipment into the corresponding normal small group in the second user equipment group, if a unit small group including only one user equipment exists in the normal small group, classify the user equipment in the unit small group into the first user equipment group, and delete the unit small group.

With reference to any one of the first possible implementation manner to the fifth possible implementation manner, in a sixth possible implementation manner, the macro base station is further configured to: after allocating the uplink data transmission subframes to the user equipments in the first user equipment group and the user equipments in the second user equipment group, allocate, according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

With reference to any one of the sixth aspect to the sixth possible implementation manner, in a seventh possible implementation manner, the measurement report is obtained through measurement by the user equipment according to a measurement configuration and is reported by the user equipment, and the measurement configuration carries information about a first intra-frequency measurement report event and information about a second intra-frequency measurement report event; when a pilot signal of a micro cell corresponding to the user equipment becomes good, the micro cell triggers the first intra-frequency measurement report event; and when the pilot signal of the micro cell becomes poor, the micro cell triggers the second intra-frequency measurement report event.

With reference to the seventh possible implementation manner, in an eighth possible implementation manner, the macro base station is specifically configured to: if the measurement report reported by the user equipment is reported by means of triggering of the first intra-frequency measurement report event, classify the user equipment into the second user equipment group; or if the measurement report reported by the user equipment is reported by means of triggering of the second intra-frequency measurement report event, compare a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classify the user equipment into the second user equipment group; or when the quantity of corresponding micro cells that are before the user equipment performs measurement is equal to the quantity of micro cells that trigger the second intra-frequency measurement report event, classify the user equipment into the first user equipment group.

With reference to any one of the sixth aspect to the eighth possible implementation manner, in a ninth possible implementation manner, the macro base station is further configured to: before the user equipment is classified into the first user equipment group or the second user equipment group according to the measurement report reported by the user equipment, and before the measurement report reported by the user equipment is received, classify the user equipment into the first user equipment group.

Beneficial effects of the present invention are:

According to the method, apparatus, and system for allocating an uplink resource, and the macro base station that are provided in present invention, a macro base station classifies user equipment into a first user equipment group or a second user equipment group according to a measurement report reported by the user equipment, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and allocates, based on a proportion of a quantity of user equipments in the first user equipment group to a quantity of user equipments in the second user equipment group, uplink data transmission subframes to the user equipments in the first user equipment group and the user equipments in the second user equipment group. In this way, a macro base station classifies uplink user equipment that interferes with a micro cell into a second user equipment group, and deliberately allocates some subframes of uplink data transmission subframes to the second user equipment group, so that the uplink user equipment, severely interfering with a micro base station, of the macro base station can be scheduled on a same subframe by the macro base station, which achieves interference alignment on a time scale, reduces a quantity of subframes severely interfering with the micro base station, effectively resolves a technical problem existing in the prior art that user equipment of a macro base station produces uplink interference to a micro cell near the user equipment of the macro base station and therefore, uplink capacity of the micro cell is reduced, thereby improving overall performance of uplink user equipment of the micro base station.

BRIEF DESCRIPTION OF DRAWINGS

FIG. 1 is a flowchart of uplink resource allocation according to an embodiment of the present invention;

FIG. 2 is a functional block diagram of a macro base station according to an embodiment of the present invention;

FIG. 3 is a functional block diagram of an apparatus for allocating an uplink resource according to an embodiment of the present invention; and

FIG. 4 is a flowchart of a method for allocating an uplink resource according to an embodiment of the present invention.

DESCRIPTION OF EMBODIMENTS

The technical solutions of the present invention are described in detail with reference to accompanying drawings and specific embodiments as follows: It should be understood that the embodiments of the present invention and specific features in the embodiments are intended for describing the technical solutions of the present invention in detail, but not for limiting the technical solutions of the present invention. The embodiments of the present invention and technical features in the embodiments may be mutually combined in a case in which they do not conflict with each other.

In the following, the preferable implementation manners of the present invention are described in detail with reference to the accompanying drawings.

An embodiment of this application provides a system for allocating an uplink resource. In an actual application, the system may have two or more system architectures.

In a first system architecture, the system may be a UTMS system. The system includes: a radio network controller (RNC, Radio Network Controller) and a macro base station. The RNC is configured to deliver a measurement configuration to user equipment, and is further configured to receive a measurement report reported by the user equipment, and forward the measurement report to the macro base station. The macro base station is configured to classify the user equipment into a first user equipment group or a second user equipment group according to the measurement report from the RNC, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and further configured to allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

In a second system architecture, the system may be an LTE system. The system includes a macro base station. The macro base station is configured to deliver a measurement configuration to user equipment, and is further configured to receive a measurement report reported by the user equipment, classify the user equipment into a first user equipment group or a second user equipment group according to the measurement report from the user equipment, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

Certainly, in an actual application, there may also be another system architecture, and no specific limitation is made in this application. It should be noted that each of the foregoing measurement reports is reported by the user equipment when a micro cell corresponding to the user equipment triggers a first intra-frequency measurement report event or a second intra-frequency measurement report event, and if the foregoing intra-frequency measurement report event is not triggered, the user equipment may still report a measurement report of another measurement event periodically or by means of triggering of an event; in this case, the macro base station classifies these user equipments into the first user equipment group.

A working procedure of the foregoing system is described below by using the UTMS system as an example.

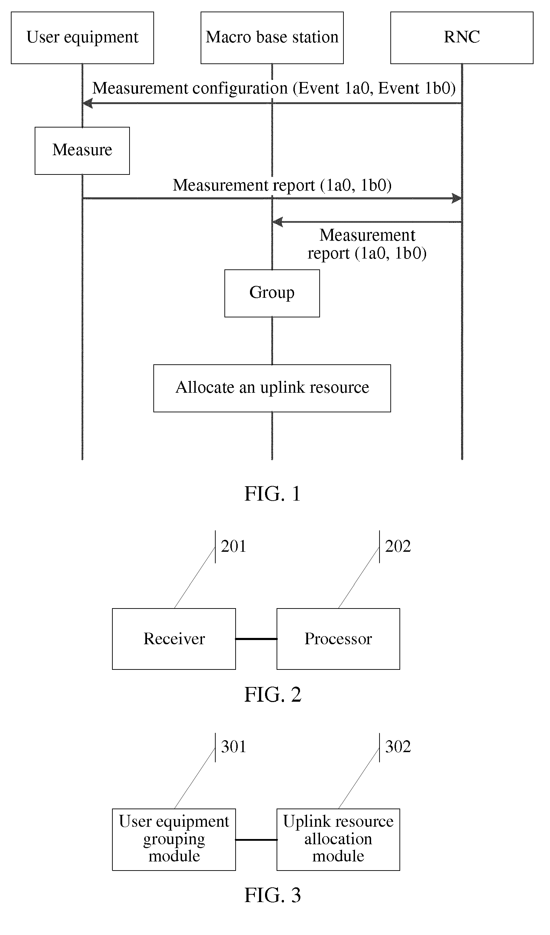

Referring to FIG. 1, first, an RNC sends a measurement configuration to uplink user equipment that accesses a macro base station, that is, user equipment in a CELL_DCH state, where the measurement configuration carries two intra-frequency measurement report events defined by the RNC: a first intra-frequency measurement report an event event 1a0 and a second intra-frequency measurement report an event event 1b0.

The event 1a0 is used to report that user equipment is changed from a first user equipment group to a second user equipment group, and the event 1b0 is used to report that user equipment is changed from the second user equipment group to the first user equipment group. Herein, a distance that is from user equipment in the second user equipment group to a macro base station is longer than a distance that is from user equipment in the first user equipment group to the macro base station, and the user equipment in the second user equipment group is located at an edge of a micro cell and is not located in a soft handover area.

In a specific implementation process, after the RNC delivers the measurement report, it is possible that none of micro cells corresponding to all user equipments triggers the newly defined intra-frequency measurement report events 1a0 and 1b0. Therefore, before receiving measurement reports that are reported by the user equipments for the first time and that are related to the event 1a0 and the event 1b0, the macro base station classifies all the user equipments into the first user equipment group. Then, the user equipment performs measurement according to the foregoing measurement configuration, and reports a measurement report to the RNC, where the measurement report may carry intrafrequency measurement report event information that triggers the foregoing intra-frequency measurement report event, for example, an identifier of a triggered event, to report a result of the triggering of the intra-frequency measurement report event to the RNC and the macro base station.

Optionally, when a pilot signal of a micro cell corresponding to the user equipment becomes good, the micro cell triggers the event 1a0 of the user equipment. When the pilot signal of the micro cell becomes poor, the micro cell triggers the event 1b0 of the user equipment.

Optionally, quality of the pilot signal may be represented by a value obtained by dividing a received signal code power (Received Signal Code Power, RSCP) of a common pilot channel (Common Pilot Channel, CPICH) or received energy per chip of a CPICH divided by an in-band power density, that is, Eb/N0. When the RSCP becomes larger or Eb/N0 becomes larger, it indicates that the pilot signal becomes good; or when the RSCP becomes smaller or Eb/N0 becomes smaller, it indicates that the pilot signal becomes poor.

Optionally, the micro cell triggers the vent 1a0 of the user equipment only when the pilot signal of the micro cell corresponding to the user equipment becomes good to a certain extent, that is, satisfies Formula (1). Formula (1) is shown as follows:

$$10 \cdot \mathrm{Log}\, M_{New} + CIO_{New} + PCO \geq W \cdot 10 \cdot \mathrm{Log}\left(\sum_{i=1}^{N_A} M_i\right) + \left(1-W\right) \cdot 10 \cdot LogM_{Best} - \left(R_{1a0} - H_{1a0}/2\right) \quad (1)$$

Correspondingly, the micro cell triggers the event 1b0 of the user equipment only when the pilot signal of the micro cell corresponding to the user equipment becomes poor to a certain extent, that is, satisfies Formula (2). Formula (2) is shown as follows:

$$10 \cdot \mathrm{Log}\, M_{Old} + CIO_{Old} + PCO \leq W \cdot 10 \cdot \mathrm{Log}\left(\sum_{i=1}^{N_A} M_i\right) + \left(1-W\right) \cdot 10 \cdot LogM_{Best} - \left(R_{1b0} - H_{1b0}/2\right) \quad (2),$$

where $M_{New}$ is a measurement result of a pilot signal of a micro base station that enters a reporting range; $CIO_{New}$ is a specific offset (Individual Cell Offset) of the micro base station that enters the reporting range; $PCO$ is a constant for discriminating a high interference user equipment, where a smaller constant indicates stronger interference that is produced by the user equipment with a corresponding micro base station; $M_i$ is a measurement result of pilots of cells in an active set; $N_A$ is a quantity of cells included in a current active set; $M_{Best}$ is a measurement result of a pilot signal of a cell whose signal is the strongest in the active set; $W$ is a weight coefficient sent by the RNC to the user equipment; $R_{1a0}$ is a reporting range constant; $H_{1a0}$ is a hysteresis value for the event 1a0; $R_{1b0}$ is a reporting range constant, and numerically, $R_{1b0} = R_{1a0}$; and $H_{1b0}$ is a hysteresis value for the event 1b0.

Then, if a micro cell A triggers the event 1a0 of the user equipment, the measurement report of the user equipment carries an identifier of the micro cell: ID=a, and information about the first intra-frequency measurement report event: Event=1a0. Correspondingly, if the micro cell A triggers the event 1b0 of the user equipment, the measurement report of the user equipment carries an identifier of the micro cell: ID=a, and information about the second intra-frequency measurement report event: Event=1b0.

Next, after receiving the foregoing measurement report, the RNC forwards the measurement report to the macro base station by using an Iub interface.

Optionally, to prevent the micro cell from continuously triggering the first intra-frequency measurement report event or the second intra-frequency measurement report event, after receiving the foregoing measurement report, the radio network controller may further notify, according to the measurement report, user equipment reporting the first intra-frequency measurement report event that before a micro cell triggering the first intra-frequency measurement report event of the user equipment triggers the second intra-frequency measurement report event of the user equipment, this micro cell does not trigger the first intra-frequency measurement report event of the user equipment any more, but another micro cell may still trigger the first intra-frequency measurement report of the user equipment; and notify user equipment reporting the second intra-frequency measurement report event that before a micro cell triggering the second intra-frequency measurement report event of the user equipment triggers the first intra-frequency measurement report event of the user equipment, this micro cell does not trigger the second intra-frequency measurement report event of the user equipment any more, but another micro cell may still trigger the second intra-frequency measurement report event of the user equipment.

For example, if a micro cell a triggers the event 1a0 of user equipment A, the micro cell a cannot retrigger the event 1a0 of the user equipment A before triggering the event 1b0 of the user equipment A, and the micro cell a can retrigger the event 1a0 of the user equipment A only after the micro cell a triggers the event 1b0 of the user equipment A. Similarly, a micro cell b triggers the event 1b0 of the user equipment A. When a measurement configuration just starts, the micro cell cannot trigger the event 1b0, and only a micro cell that has triggered the event 1a0 can trigger the corresponding event 1b0. Therefore, before triggering the event 1a0 of the user equipment A, the micro cell b cannot retrigger the event 1b0 of the user equipment A, and the micro cell b can retrigger the event 1b0 of the user equipment A only after the micro cell b triggers the event 1a0 of the user equipment A. Triggering of an event between different micro cells is independent of each other, and is not affected by each other.

Further, the macro base station classifies the user equipment into the first user equipment group or the second user equipment group according to the measurement report from the RNC.

Optionally, if the measurement report reported by the user equipment is reported by means of triggering of the first intra-frequency measurement report event, for example, the measurement report carries the identifier of the micro cell and the information about the first intra-frequency measurement report event: event=1a0, the macro base station classifies the user equipment into the second user equipment group; or if the measurement report reported by the user equipment is reported by means of triggering of the second intra-frequency measurement report event, for example, the measurement report carries the identifier of the micro cell and the information about the second intra-frequency measurement report event: event=1b0, the macro base station compares a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, the macro base station classifies the user equipment into the second user equipment group; or when the quantity of corresponding micro cells that are before the user equipment performs measurement is equal to the quantity of micro cells that trigger the second intra-frequency measurement report event, the macro base station classifies the user equipment into the first user equipment group.

For example, before reporting a measurement report, the user equipment A is located at edges of micro cells a and b, and is high interference user equipment of these two cells, that is, the user equipment A corresponds to the micro cells a and b. Therefore, if in the measurement report that is reported by the user equipment A and that is received by the macro base station, there is only the micro cell a that carries information about a second intra-frequency measurement report event: Event=1b0, that is, the user equipment A is normal user equipment of the micro cell a, but is still the high interference user equipment of the micro cell b, that is, a quantity of corresponding micro cells that are before the user equipment A performs measurement is greater than a quantity of micro cells that trigger the second intra-frequency measurement report event, in this case, the macro base station still classifies the user equipment A into the second user equipment group; or if in the measurement report that is reported by the user equipment A and that is received by the macro base station, there are the micro cells a and b that carry information about a second intra-frequency measurement report event: Event=1b0, that is, the user equipment A is normal user equipment of the micro cell a and the micro cell b, that is, a quantity of corresponding micro cells that are before the user equipment A performs measurement is equal to a quantity of micro cells that trigger the second intra-frequency measurement report event, in this case, the macro base station still classifies the user equipment A into the first user equipment group.

Finally, when a scheduling period arrives, the macro base station allocates, within the scheduling period and based on a proportion of a quantity of user equipments in the first user equipment group to a quantity of user equipments in the second user equipment group, uplink data transmission subframes to the user equipments in the first user equipment group and the user equipments in the second user equipment group.

For example, the macro base station has N uplink data transmission subframes in total, and the quantity of user equipments in the first user equipment group: the quantity of user equipments in the second user equipment group = $k$:1. Therefore, the macro base station allocates $\dfrac{k}{k+1} N$ uplink data transmission subframes to the user equipments in the first user equipment group, and allocates $\dfrac{1}{k+1} N$ uplink data transmission subframes to the user equipments in the second user equipment group, where N is a positive integer, and $k$ is greater than or equal to 0.

After uplink resources are allocated, the macro base station schedules user equipment in the first user equipment group and in the second user equipment group according to a specific scheduling rule, for example, round-robin scheduling.

Further, after the macro base station groups the user equipments into two large groups, that is, the first user equipment group and the second user equipment group, because multiple micro cells may exist in a coverage area of the macro base station, the macro base station separately determines, according to a measurement report reported by each user equipment in the second user equipment group, a micro cell corresponding to each user equipment, where each user equipment is located at an edge of one or more micro cells; and separately classifies each user equipment into a corresponding small group in the second user equipment group according to the micro cell corresponding to each user equipment, where the micro cell corresponding to each user equipment corresponds to one small group in the group.

Optionally, the user equipment in the second user equipment group is located at an edge of at least one micro cell. Then, the macro base station can determine, according to a micro base station that is reported by the user equipment in the second user equipment group, an edge of which micro cell each user equipment is located at, and the one or more micro cells are micro cells corresponding to the user equipment. Then, the macro base station may further divide the second user equipment group into small groups according to the micro cell corresponding to each user equipment.

Optionally, the foregoing small groups may be grouped according to a quantity of micro cells in the coverage area when the macro base station is implemented, or may be dynamically generated according to the measurement report of the user equipment, and no specific limitation is made in this application.

In this embodiment, the foregoing procedure of grouping of small groups may have, but is not limited to, the following two cases.

In a first case, it is possible in the second user equipment group that each user equipment corresponds to only one micro cell. Then, the macro base station separately classifies each user equipment into a normal small group in the second user equipment group according to the micro cell corresponding to each user equipment, where there is a one-to-one correspondence between the normal small group and the micro cell corresponding to each user equipment. For example, in the second user equipment group, user equipment 1 is located at an edge of a micro cell a, user equipment 2 is located at an edge of a micro cell b, user equipment 3 is also located at the edge of the micro cell a, and user equipment 4 is located at an edge of a micro cell c. Then, the macro base station classifies the user equipment 1 and the user equipment 3 into a normal small group a corresponding to the micro cell a, classifies the user equipment 2 into a normal small group b corresponding to the micro cell b, and classifies the user equipment 4 into a normal small group c corresponding to the micro cell c.

In a second case, if any user equipment in the second user equipment group is located at an edge of only a single micro cell, the macro base station classifies the any user equipment into a normal small group in the second user equipment group, where there is a one-to-one correspondence between the normal small group and the single micro cell; or if any user equipment is located at edges of at least two micro cells, the macro base station classifies the any user equipment into a particular small group corresponding to the foregoing at least two micro cells, where the particular small group is a small group other than the normal small group.

For example, in the second user equipment group, user equipment 1 is located at an edge of a micro cell a, user equipment 2 is located at an edge of a micro cell b, user equipment 3 is located at edges of both micro cells c and f, and user equipment 4 is located at edges of micro cells d and f. Then, the macro base station classifies the user equipment 1 into a normal small group a corresponding to the micro cell a, classifies the user equipment 2 into a normal small group b corresponding to the micro cell b, classifies the user equipment 3 into a particular small group cf corresponding to the micro cells c and f, and classifies the user equipment 4 into a particular small group df corresponding to the micro cells d and f.

In an actual application, there may be another grouping policy, and no specific limitation is made in this application.

Further, after the macro base station completes group classification, to optimize grouping, in the foregoing second case, if the foregoing particular small group includes only one user equipment, the macro base station classifies the user equipment in the particular small group into a normal small group that corresponds to any micro cell of the at least two micro cells, and deletes the particular small group.

For example, after the macro base station classifies all the user equipments and small groups, if the particular small group cf includes only the user equipment 3 that is located at the edges of both the micro cell c and the micro cell f, the macro base station classifies the user equipment 3 into a normal small group c corresponding to the micro cell c or a normal small group f corresponding to the micro cell f, and then deletes the particular small group cf.

In the foregoing first and/or second case, after the macro base station completes group classification, to optimize grouping, after the macro base station classifies the user equipment into the normal small group in the second user equipment group, if a unit small group including only one user equipment exists in the normal small group, the macro base station may further classify the user equipment in the unit small group into the first user equipment group, and delete the unit small group.

For example, after the macro base station classifies all the user equipments and small groups, if the normal small group a includes only the user equipment 1, the normal small group a is a unit small group, and the macro base station classifies the user equipment 1 in the small group into the first user equipment group, and then deletes the normal small group a.

At this point, the macro base station completes the group classification of the user equipment.

Next, the macro base station allocates uplink data transmission subframes to the small groups.

Specifically, after allocating uplink data transmission subframes to the second user equipment group, the macro base station allocates, according to a proportion of a quantity of user equipments in each small group in the second user equipment group to the quantity of user equipments in the second user equipment group, the uplink data transmission subframes that are allocated to the second user equipment group to the user equipment in each small group in the second user equipment group. The macro base station may classify the uplink data transmission subframes into normal subframes and high interference subframes. After the macro base station completes the grouping, the macro base station determines patterns of the normal subframes and the high interference subframes, where for example, it is set that within each scheduling period, a previous segment of subframes are high interference subframes, and a next segment of subframes are normal subframes, and sends, to the RNC by using the Iub interface, a proportion of the normal subframes to the high interference subframes and the patterns of the normal subframes and the high interference subframes. The RNC then sends the proportion and the patterns to the corresponding micro base station by using the Iub interface.

For example, if previously, the macro base station allocates X uplink data transmission subframes to Y user equipments in the second user equipment group, and the normal small group a in the second user equipment group includes S user equipments, the macro base station allocates $\dfrac{NS}{(k+1)\ Y}$ uplink data transmission subframes to the user equipments in the normal small group a.

Further, after the uplink resources are allocated, the macro base station may schedule, on a corresponding uplink data transmission subframe, the user equipment in each group according to a preset scheduling rule.

As can be known from the foregoing description, a macro base station classifies user equipment into a first user equipment group or a second user equipment group according to a measurement report reported by the user equipment, where a distance that is from user equipment in the second user equipment group to the macro base station is longer than a distance that is from user equipment in the first user equipment group to the macro base station, and the user equipment in the second user equipment group is located at an edge of a micro cell and is not located in a soft handover area; and allocates, based on a proportion of a quantity of user equipments in the first user equipment group to a quantity of user equipments in the second user equipment group, uplink data transmission subframes to the user equipments in the first user equipment group and the user equipments in the second user equipment group. In this way, a macro base station classifies uplink user equipment that interferes with a micro cell into a second user equipment group, and deliberately allocates some subframes of uplink data transmission subframes to the second user equipment group, so that the uplink user equipment, severely interfering with a micro base station, of the macro base station can be scheduled on a same subframe by the macro base station, which achieves interference alignment on a time scale, reduces a quantity of subframes severely interfering with the micro base station, effectively resolves a technical problem existing in the prior art that user equipment of a macro base station produces uplink interference to a micro cell near the user equipment of the macro base station and therefore, uplink capacity of the micro cell is reduced, thereby improving overall performance of uplink user equipment of the micro base station.

Based on a same inventive concept, this application further provides a macro base station. The macro base station may be a macro base station in a UTMS system, or may be a macro base station in an LTE system, or may be a macro base station in another system, and no specific limitation is made in this application.

Referring to FIG. 2, the macro base station includes: a receiver 201, configured to receive a measurement report reported by user equipment; and a processor 202, configured to classify the user equipment into a first user equipment group or a second user equipment group according to the measurement report reported by the user equipment, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and further configured to allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

In this embodiment, for a system having a UTMS architecture, the foregoing measurement configuration is delivered by an RNC to each user equipment, and the measurement configuration carries information about a first intra-frequency measurement report event and information about a second intra-frequency measurement report event that are defined by the RNC. When a pilot signal of a micro cell corresponding to user equipment becomes good, the micro cell triggers the first intra-frequency measurement report event; and when the pilot signal of the micro cell becomes poor, the micro cell triggers the second intra-frequency measurement report event. Therefore, when the micro cell corresponding to the user equipment triggers the first intra-frequency measurement report event or the second intra-frequency measurement report event, a measurement report is reported to the RNC, and the measurement report is forwarded by the RNC to the receiver 201 by using an Iub interface.

Optionally, the micro cell triggers the event 1a0 of the user equipment only when the pilot signal of the micro cell corresponding to the user equipment becomes good to a certain extent, that is, satisfies Formula (1). Correspondingly, the micro cell triggers the event 1b0 of the user equipment only when the pilot signal of the micro cell corresponding to the user equipment becomes poor to a certain extent, that is, satisfies Formula (2).

Alternatively, for a system having an LTE architecture, the macro base station may further include: a sender, configured to deliver the measurement configuration to the user equipment, so that the user equipment can perform measurement based on the measurement configuration, and report the measurement report when the micro cell corresponding to the user equipment triggers the first intra-frequency measurement report event or the second intra-frequency measurement report event. In this case, the intra-frequency measurement report event in the measurement configuration is defined by the macro base station itself. Then, after completing measurement, the user equipment reports the measurement report to the macro base station, that is, sends the measurement report to the receiver 201.

In this case, the processor 202 is specifically configured to: if the measurement report reported by the user equipment is reported by means of triggering of the first intra-frequency measurement report event, classify the user equipment into the second user equipment group; or if the measurement report reported by the user equipment is reported by means of triggering of the second intra-frequency measurement report event, compare a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classify the user equipment into the second user equipment group; or when the quantity of corresponding micro cells that are before the user equipment performs measurement is equal to the quantity of micro cells that trigger the second intra-frequency measurement report event, classify the user equipment into the first user equipment group.

Further, the processor 202 is further configured to: before the macro base station classifies the user equipment into the first user equipment group or the second user equipment group according to the measurement report reported by the user equipment, and receives the measurement report reported by the user equipment, classify the user equipment into the first user equipment group.

Optionally, the processor 202 is further configured to: after classifying the user equipment into the second user equipment group, separately determine, according to a measurement report reported by each user equipment in the second user equipment group, a micro cell corresponding to each user equipment, where each user equipment is located at an edge of one or more micro cells; and separately classify each user equipment into a corresponding small group in the second user equipment group according to the micro cell corresponding to each user equipment, where the micro cell corresponding to each user equipment corresponds to one small group in the group.

Further, the processor 202 is specifically configured to separately classify each user equipment into a normal small group in the second user equipment group according to the micro cell corresponding to each user equipment, where there is a one-to-one correspondence between the normal small group and the micro cell corresponding to each user equipment.

Further, the processor 202 is specifically configured to: if any user equipment in the second user equipment group is located at an edge of only a single micro cell, classify the any user equipment into a normal small group in the second user equipment group, where there is a one-to-one correspondence between the normal small group and the single micro cell; or if any user equipment is located at edges of at least two micro cells, classify the any user equipment into a particular small group corresponding to the at least two micro cells, where the particular small group is a small group other than the normal small group.

Optionally, the processor 202 is further configured to: after classifying the any user equipment into the particular small group corresponding to the at least two micro cells, if the particular small group includes only one user equipment, classify the user equipment in the particular small group into a normal small group that corresponds to any micro cell of the at least two micro cells, and delete the particular small group.

Optionally, the processor 202 is further configured to: after classifying the user equipment into the corresponding normal small group in the second user equipment group, if a unit small group including only one user equipment exists in the normal small group, classify the user equipment in the unit small group into the first user equipment group, and delete the unit small group.

Optionally, the processor 202 is further configured to: after allocating the uplink data transmission subframes to the user equipments in the first user equipment group and the user equipments in the second user equipment group, allocate, according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

Variations and specific examples of the system for allocating an uplink resource in the foregoing embodiment are also applicable to the macro base station in this embodiment. According to the foregoing detailed descriptions of the system for allocating an uplink resource, a person skilled in the art may clearly understand an implementation method of the macro base station in this embodiment; therefore, for brevity of the specification, details are not described herein again.

Based on a same inventive concept, an embodiment further provides a radio network controller, including: a sender, configured to deliver a measurement configuration to user equipment, where the measurement configuration carries information about a first intra-frequency measurement report event and information about a second intra-frequency measurement report event, and when a pilot signal of a micro cell corresponding to the user equipment becomes good, the micro cell triggers the first intra-frequency measurement report event; and when the pilot signal of the micro cell becomes poor, the micro cell triggers the second intra-frequency measurement report event; and further configured to forward, to a macro base station, a measurement report that is obtained through measurement by the user equipment according to the measurement configuration and that is reported by the user equipment; and a receiver, configured to receive the measurement report.

Further, to prevent the micro cell from continuously triggering the first intra-frequency measurement report event or the second intra-frequency measurement report event, after receiving the foregoing measurement report, the radio network controller may further notify, according to the measurement report, user equipment reporting the first intra-frequency measurement report event that before a micro cell triggering the first intra-frequency measurement report event of the user equipment triggers the second intra-frequency measurement report event of the user equipment, this micro cell does not trigger the first intra-frequency measurement report event of the user equipment any more, but another micro cell may still trigger the first intra-frequency measurement report event of the user equipment; and notify user equipment reporting the second intra-frequency measurement report event that before a micro cell triggering the second intra-frequency measurement report event of the user equipment triggers the first intra-frequency measurement report event of the user equipment, this micro cell does not trigger the second intra-frequency measurement report event of the user equipment any more, but another micro cell may still trigger the second intra-frequency measurement report event of the user equipment.

Variations and specific examples of the system for allocating an uplink resource in the foregoing embodiment are also applicable to the radio network controller in this embodiment. According to the foregoing detailed descriptions of the system for allocating an uplink resource, a person skilled in the art may clearly understand an implementation method of the radio network controller in this embodiment; therefore, for brevity of the specification, details are not described herein again.

Based on a same inventive concept, this embodiment further provides user equipment, including: a receiver, configured to receive a measurement configuration delivered from a network side, where the measurement configuration carries information about a first intra-frequency measurement report event and information about a second intra-frequency measurement report event, and when a pilot signal of a micro cell corresponding to the user equipment becomes good, the micro cell triggers the first intra-frequency measurement report event; and when the pilot signal of the micro cell becomes poor, the micro cell triggers the second intra-frequency measurement report event; and a sender, configured to: when measurement is performed according to the measurement configuration, and a micro cell triggers the first intra-frequency measurement report event and/or the second intra-frequency measurement report event, report a measurement report to the network side.

It should be noted that the foregoing network side may include different network-side devices for networks having different system architecture. For example, for an UMTS system, the network side includes at least an RNC and a macro base station, but for an LTE system, the network side includes at least a macro base station.

Therefore, for the UTMS system, the RNC is configured to deliver the measurement configuration to the user equipment. After completing measurement, the user equipment reports the measurement report to the RNC, and the RNC then forwards the measurement report to the macro base station. For the LTE system, the macro base station is configured to deliver the measurement configuration to the user equipment. After completing measurement, the user equipment directly reports the measurement report to the macro base station.

Certainly, in another system architecture, a process of reporting the measurement report by the user equipment may be in another manner, and no specific limitation is made in this application.

Variations and specific examples of the system for allocating an uplink resource in the foregoing embodiment are also applicable to the user equipment in this embodiment. According to the foregoing detailed descriptions of the system for allocating an uplink resource, a person skilled in the art may clearly understand an implementation method of the user equipment in this embodiment; therefore, for brevity of the specification, details are not described herein again.

Based on a same inventive concept, this embodiment further provides an apparatus for allocating an uplink resource. The apparatus may be disposed in a macro base station in a UTMS system, or may be disposed in a macro base station in an LTE system, and no specific limitation is made in this application.

Referring to FIG. 3, the apparatus specifically includes: a user equipment grouping module 301, configured to classify user equipment into a first user equipment group or a second user equipment group according to a measurement report reported by the user equipment, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and an uplink resource allocation module 302, configured to allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

For the UTMS system, the apparatus may further include: a receiving module, configured to: before the user equipment grouping module classifies the user equipment into the first user equipment group or the second user equipment group according to the measurement report reported by the user equipment, receive the measurement report, forwarded by an RNC, of the user equipment, where the measurement report is obtained through measurement by the user equipment according to a measurement configuration delivered by the radio network controller and is reported to the radio network controller when a micro cell corresponding to the user equipment triggers a first intra-frequency measurement report event or a second intra-frequency measurement report event.

For the LTE system, the apparatus may further include: a measurement configuration module, configured to: before the user equipment grouping module classifies the user equipment into the first user equipment group or the second user equipment group according to the measurement report reported by the user equipment, deliver a measurement configuration to the user equipment, and receive the measurement report that is obtained through measurement by the user equipment based on the measurement configuration and that is reported when a micro cell corresponding to the user equipment triggers a first intra-frequency measurement report event or a second intra-frequency measurement report event.

In the foregoing one or more embodiments, preferably, the micro cell triggers the first intra-frequency measurement report event of the user equipment only when a pilot signal of a micro cell corresponding to the user equipment becomes good to a certain extent, that is, satisfies Formula (1). Correspondingly, the micro cell triggers the second intra-frequency measurement report event of the user equipment only when the pilot signal of the micro cell corresponding to the user equipment becomes poor to a certain extent, that is, satisfies Formula (2).

Optionally, to prevent the micro cell from continuously triggering the event 1a0 or 1b0, after receiving the foregoing measurement report, the receiving module or the measurement configuration module may further notify, according to the measurement report, user equipment reporting the event 1a0 that before a micro cell triggering the event 1a0 of the user equipment triggers the event 1b0 of the user equipment, this micro cell does not trigger the event 1a0 of the user equipment any more, but another micro cell may still trigger the event 1a0 of the user equipment; and notify user equipment reporting the event 1b0 that before a micro cell triggering the event 1b0 of the user equipment triggers the event 1a0 of the user equipment, this micro cell does not trigger the event 1b0 of the user equipment any more, but another micro cell may still trigger the event 1b0 of the user equipment.

For example, if a micro cell a triggers Event 1a0 of user equipment A, the micro cell a cannot retrigger the event 1a0 of the user equipment A before triggering the event 1b0 of the user equipment A, and the micro cell a can retrigger the event 1a0 of the user equipment A only after the micro cell a triggers the event 1b0 of the user equipment A. Similarly, a micro cell b triggers the event 1b0 of the user equipment A. When a measurement configuration just starts, the micro cell cannot trigger the event 1b0, and only a micro cell that has triggered the event 1a0 can trigger corresponding the event 1b0. Therefore, before triggering the event 1a0 of the user equipment A, the micro cell b cannot retrigger the event 1b0 of the user equipment A, and the micro cell b can retrigger the event 1b0 of the user equipment A only after the micro cell b triggers the event 1a0 of the user equipment A. Triggering of an event between different micro cells is independent of each other, and is not affected by each other.

In this case, the user equipment grouping module 301 is specifically configured to: if the measurement report reported by the user equipment is reported by means of triggering of the first intra-frequency measurement report event, classify the user equipment into the second user equipment group; or if the measurement report reported by the user equipment is reported by means of triggering of the second intra-frequency measurement report event, compare a quantity of corresponding micro cells that are before the user equipment performs measurement with a quantity of micro cells that trigger the second intra-frequency measurement report event, where when the quantity of corresponding micro cells that are before the user equipment performs measurement is greater than the quantity of micro cells that trigger the second intra-frequency measurement report event, the macro base station classifies the user equipment into the second user equipment group; or when the quantity of corresponding micro cells that are before the user equipment performs measurement is equal to the quantity of micro cells that trigger the second intra-frequency measurement report event, the macro base station classifies the user equipment into the first user equipment group.

Optionally, the user equipment grouping module 301 is further configured to: before the macro base station classifies the user equipment into the first user equipment group or the second user equipment group according to the measurement report reported by the user equipment, and receives the measurement report that is reported by the user equipment for the first time, classify the user equipment into the first user equipment group.

Further, the user equipment grouping module 301 specifically includes: a micro cell determining module, configured to: after the user equipment grouping module classifies the user equipment into the second user equipment group, separately determine, according to a measurement report reported by each user equipment in the second user equipment group, a micro cell corresponding to each user equipment, where each user equipment is located at an edge of one or more micro cells; and a small-group grouping module, configured to separately classify each user equipment into a corresponding small group in the second user equipment group according to the micro cell corresponding to each user equipment, where the micro cell corresponding to each user equipment corresponds to one small group in the group.

Further, the small-group grouping module is specifically configured to separately classify each user equipment into a normal small group in the second user equipment group according to the micro cell corresponding to each user equipment, where there is a one-to-one correspondence between the normal small group and the micro cell corresponding to each user equipment.

Further, the small-group grouping module is specifically configured to: if any user equipment in the second user equipment group is located at an edge of only a single micro cell, classify the any user equipment into a normal small group in the second user equipment group, where there is a one-to-one correspondence between the normal small group and the single micro cell; or if any user equipment is located at edges of at least two micro cells, classify, by the macro base station, the any user equipment into a particular small group corresponding to the at least two micro cells, where the particular small group is a small group other than the normal small group.

Further, the user equipment grouping module 301 further includes: a small-group optimization module, configured to: after the small-group grouping module classifies the any user equipment into the particular small group corresponding to the at least two micro cells, if the particular small group includes only one user equipment, classify the user equipment in the particular small group into a normal small group that corresponds to any micro cell of the at least two micro cells, and delete the particular small group.

Optionally, the small-group optimization module is further configured to: after the small-group grouping module classifies the user equipment into the corresponding normal small group in the second user equipment group, if a unit small group including only one user equipment exists in the normal small group, classify the user equipment in the unit small group into the first user equipment group, and delete the unit small group.

Further, the uplink resource allocation module 302 specifically includes: a small-group resource allocation module, configured to: after the uplink resource allocation module allocates the uplink data transmission subframes to the user equipments in the first user equipment group and the user equipments in the second user equipment group, allocate, according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

Variations and specific examples of the system for allocating an uplink resource in the foregoing embodiment are also applicable to the apparatus in this embodiment. According to the foregoing detailed descriptions of the system for allocating an uplink resource, a person skilled in the art may clearly understand an implementation method of the apparatus in this embodiment; therefore, for brevity of the specification, details are not described herein again.

Based on a same inventive concept, this embodiment further provides a method for allocating an uplink resource. The method may be applied to a UTMS system or an LTE system, or certainly, may be applied to a system having another architecture, and no specific limitation is made in this application.

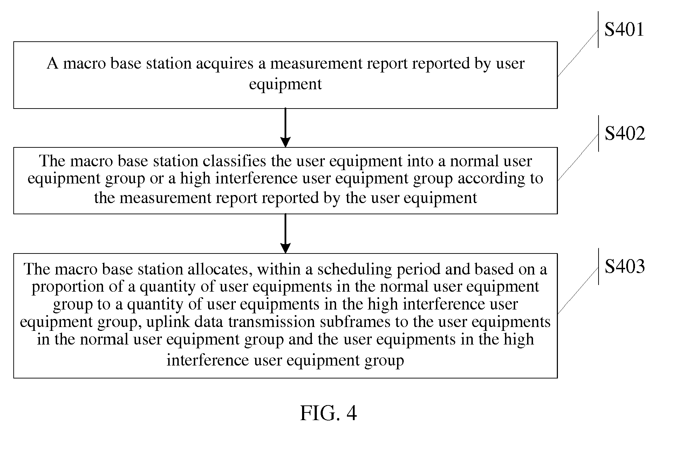

Referring to FIG. 4, the method includes:

S401: A macro base station acquires a measurement report reported by user equipment.

S402: The macro base station classifies the user equipment into a first user equipment group or a second user equipment group according to the measurement report reported by the user equipment, where user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station.

S403: The macro base station allocates, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

In this embodiment, for the UTMS system, step S401 is specifically: delivering, by the macro base station, a measurement configuration to the user equipment; and receiving, by the macro base station, the measurement report that is obtained through measurement by the user equipment based on the measurement configuration and that is reported by the user equipment.

For the LTE system, step S401 specifically includes: receiving, by the macro base station, the measurement report, forwarded by an RNC, of the user equipment, where the measurement report is obtained through measurement by the user equipment according to the measurement configuration delivered by the RNC and is reported to the RNC by the user equipment.

It should be noted that the foregoing measurement report is obtained through measurement by the user equipment according to the measurement configuration and is reported by the user equipment, and the measurement configuration carries information about a first intra-frequency measurement report event and information about a second intra-frequency measurement report event; where when a pilot signal of a micro cell related to the user equipment becomes good, the micro cell triggers the first intra-frequency measurement report event; and when the pilot signal of the micro cell becomes poor, the micro cell triggers the second intra-frequency measurement report event.

Preferably, the micro cell triggers an event 1a0 of the user equipment only when the pilot signal of the micro cell corresponding to the user equipment becomes good to a certain extent, that is, satisfies Formula (1). Correspondingly, the micro cell triggers an event 1b0 of the user equipment only when the pilot signal of the micro cell corresponding to the user equipment becomes poor to a certain extent, that is, satisfies Formula (2).

Optionally, to prevent the micro cell from continuously triggering the event 1a0 or 1b0, after receiving the foregoing measurement report, the RNC or the macro base station may further notify, according to the measurement report, user equipment reporting the event 1a0 that before a micro cell triggering the event 1a0 of the user equipment triggers the event 1b0 of the user equipment, this micro cell does not trigger the event 1a0 of the user equipment any more, but another micro cell may still trigger the event 1a0 of the user equipment; and notify user equipment reporting the event 1b0 that before a micro cell triggering the event 1b0 of the user equipment triggers the event 1a0 of the user equipment, this micro cell does not trigger the event 1b0 of the user equipment any more, but another micro cell may still trigger the event 1b0 of the user equipment.

For example, if a micro cell a triggers the event 1a0 of user equipment A, the micro cell a cannot retrigger the event 1a0 of the user equipment A before triggering the event 1b0 of the user equipment A, and the micro cell a can retrigger the event 1a0 of the user equipment A only after the micro cell a triggers the event 1b0 of the user equipment A. Similarly, a micro cell b triggers the event 1b0 of the user equipment A. When a measurement configuration just starts, the micro cell cannot trigger the event 1b0, and only a micro cell that has triggered the event 1a0 can trigger corresponding the event 1b0. Therefore, before triggering the event 1a0 of the user equipment A, the micro cell b cannot retrigger the event 1b0 of the user equipment A, and the micro cell b can retrigger the event 1b0 of the user equipment A only after the micro cell b triggers the event 1a0 of the user equipment A. Triggering of an event between different micro cells is independent of each other, and is not affected by each other.

In this case, step S402 may be specifically: if the measurement report reported by the user equipment is reported by means of triggering of the first intra-frequency measurement report event, classifying, by the macro base station, the user equipment into the second user equipment group; or if the measurement report reported by the user equipment is reported by means of triggering of the second intra-frequency measurement report event, comparing, by the macro base station, a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classifying, by the macro base station, the user equipment into the second user equipment group; or when the quantity of corresponding micro cells that are before the user equipment performs measurement is equal to the quantity of micro cells that trigger the second intra-frequency measurement report event, classifying, by the macro base station, the user equipment into the first user equipment group.

Further, in an actual application, there may be user equipment that is not located at an edge of a micro cell. Then, before step S401, the method further includes: before receiving the measurement report reported by the user equipment, classifying, by the macro base station, the user equipment into the first user equipment group.

S403: The macro base station allocates, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

In another embodiment, because multiple micro cells may exist in a coverage area of the macro base station, after step S402 and before step S403, the macro base station may further divide the second user equipment group, and therefore, the method further includes: separately determining, by the macro base station according to a measurement report reported by each user equipment in the second user equipment group, a micro cell corresponding to each user equipment, where each user equipment is located at an edge of one or more micro cells; and separately classifying, by the macro base station, each user equipment into a corresponding small group in the second user equipment group according to the micro cell corresponding to each user equipment, where there is a one-to-one correspondence between the micro cell corresponding to each user equipment and each small group in the group.

Specifically, the macro base station separately determines, according to the measurement report reported by each user equipment in the second user equipment group, the micro cell corresponding to each user equipment, where each user equipment is located at an edge of one or more micro cells, and separately classifies each user equipment into the corresponding group in the second user equipment group according to the micro cell corresponding to each user equipment, where the micro cell corresponding to each user equipment corresponds to one small group in the group.

Specifically, the user equipment in the second user equipment group is located at an edge of at least one micro cell. Then, the macro base station can determine, according to a micro base station that is reported by the user equipment in the second user equipment group, an edge of which micro cell each user equipment is located at, and the one or more micro cells are micro cells corresponding to the user equipment. Then, the macro base station may divide the second user equipment group into small groups according to the micro cell corresponding to each user equipment.

It should be noted that, in an actual application, the foregoing small groups may be grouped according to a quantity of micro cells in the coverage area when the macro base station is implemented, or may be dynamically generated according to the measurement report of the user equipment, and no specific limitation is made in this application.

In this embodiment, the foregoing procedure of grouping of small groups may have, but is not limited to, the following two cases.

In a first case, it is possible in the second user equipment group that each user equipment corresponds to only one micro cell. Then, the macro base station separately classifies each user equipment into a normal small group in the second user equipment group according to the micro cell corresponding to each user equipment, where there is a one-to-one correspondence between the normal small group and the micro cell corresponding to each user equipment.

For example, in the second user equipment group, user equipment 1 is located at an edge of a micro cell a, user equipment 2 is located at an edge of a micro cell b, user equipment 3 is also located at the edge of the micro cell a, and user equipment 4 is located at an edge of a micro cell c. Then, the macro base station classifies the user equipment 1 and the user equipment 3 into a normal small group a corresponding to the micro cell a, classifies the user equipment 2 into a normal small group b corresponding to the micro cell b, and classifies the user equipment 4 into a normal small group c corresponding to the micro cell c.

In a second case, if any user equipment in the second user equipment group is located at an edge of only a single micro cell, the macro base station classifies the any user equipment into a normal small group in the second user equipment group, where there is a one-to-one correspondence between the normal small group and the single micro cell; or if any user equipment is located at edges of at least two micro cells, the macro base station classifies the any user equipment into a particular small group corresponding to the at least two micro cells, where the particular small group is a small group other than the normal small group.

For example, in the second user equipment group, user equipment 1 is located at an edge of a micro cell a, user equipment 2 is located at an edge of a micro cell b, user equipment 3 is located at edges of both micro cells c and f, and user equipment 4 is located at edges of micro cells d and f. Then, the macro base station classifies the user equipment 1 into a normal small group a corresponding to the micro cell a, classifies the user equipment 2 into a normal small group b corresponding to the micro cell b, classifies the user equipment 3 into a particular small group cf corresponding to the micro cells c and f, and classifies the user equipment 4 into a particular small group df corresponding to the micro cells d and f.

In an actual application, there may be another grouping policy, and no specific limitation is made in this application.

Further, after the macro base station completes group classification, to optimize grouping, in the foregoing second case, if the particular small group includes only one user equipment, the macro base station classifies the user equipment in the particular small group into a normal small group that corresponds to any micro cell of the at least two micro cells, and deletes the particular small group.

For example, after the macro base station classifies all the user equipments and small groups, if the particular small group cf includes only the user equipment 3 that is located at the edges of both the micro cell c and the micro cell f, the macro base station classifies the user equipment 3 into a normal small group c corresponding to the micro cell c or a normal small group f corresponding to the micro cell f, and then deletes the particular small group cf.

In the foregoing first and/or second case, after the macro base station completes group classification, to optimize grouping, after the macro base station classifies the user equipment into the normal small group in the second user equipment group, if a unit small group including only one user equipment exists in the normal small group, the macro base station may further classify the user equipment in the unit small group into the first user equipment group, and delete the unit small group.

For example, after the macro base station classifies all the user equipments and small groups, if the normal small group a includes only the user equipment 1, the normal small group a is a unit small group, and the macro base station classifies the user equipment 1 in the small group into the first user equipment group, and then deletes the normal small group a.

At this point, the macro base station completes the group classification of the user equipment.

Next, after step S403 is performed, uplink resources need to be further allocated to the small groups in the second user equipment group, and therefore, the method further includes: allocating, by the macro base station according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

Variations and specific examples of the system for allocating an uplink resource in the foregoing embodiment are also applicable to the method in this embodiment. According to the foregoing detailed descriptions of the system for allocating an uplink resource, a person skilled in the art may clearly understand an implementation method of the method in this embodiment; therefore, for brevity of the specification, details are not described herein again.

The technical solutions in the foregoing embodiments of the this application have at least the following technical effects or advantages:

According to the method, apparatus, and system for allocating an uplink resource, and the macro base station that are provided in present invention, a macro base station classifies user equipment into a first user equipment group or a second user equipment group according to a measurement report reported by the user equipment, where a distance that is from user equipment in the second user equipment group to the macro base station is longer than a distance that is from user equipment in the first user equipment group to the macro base station, and the user equipment in the second user equipment group is located at an edge of a micro cell and is not located in a soft handover area; and allocates, based on a proportion of a quantity of user equipments in the first user equipment group to a quantity of user equipments in the second user equipment group, uplink data transmission subframes to the user equipments in the first user equipment group and the user equipments in the second user equipment group. In this way, a macro base station classifies uplink user equipment that interferes with a micro cell into a second user equipment group, and deliberately allocates some subframes of uplink data transmission subframes to the second user equipment group, so that the uplink user equipment, severely interfering with a micro base station, of the macro base station can be scheduled on a same subframe by the macro base station, which achieves interference alignment on a time scale, reduces a quantity of subframes severely interfering with the micro base station, effectively resolves a technical problem existing in the prior art that user equipment of a macro base station produces uplink interference to a micro cell near the user equipment of the macro base station and therefore, uplink capacity of the micro cell is reduced, thereby improving overall performance of uplink user equipment of the micro base station.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1.  An apparatus for allocating an uplink resource, comprising:

    a measurement report acquiring module, configured to acquire a measurement report reported by user equipment; and
    a user equipment grouping module, configured to classify the user equipment into a first user equipment group or a second user equipment group according to the measurement report, wherein interference of user equipment that is in the first user equipment group to a micro cell is less than interference of user equipment that is in the second user equipment group to the micro cell; and
    an uplink resource allocation module, configured to allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

2.  The apparatus according to claim 1, wherein the user equipment grouping module specifically comprises:

    a micro cell determining module, configured to: after the user equipment grouping module classifies the user equipment into the second user equipment group, separately determine, according to a measurement report reported by each user equipment in the second user equipment group, a micro cell corresponding to each user equipment, wherein each user equipment is located at an edge of one or more micro cells; and
    a small-group grouping module, configured to separately classify each user equipment into a corresponding small group in the second user equipment group according to the micro cell corresponding to each user equipment, wherein the micro cell corresponding to each user equipment corresponds to one small group in the group.

3.  The apparatus according to claim 2, wherein the small-group grouping module is specifically configured to separately classify each user equipment into a normal small group in the second user equipment group according to the micro cell corresponding to each user equipment, wherein there is a one-to-one correspondence between the normal small group and the micro cell corresponding to each user equipment.

4.  The apparatus according to claim 2, wherein the small-group grouping module is specifically configured to: if any user equipment in the second user equipment group is located at an edge of only a single micro cell, classify the any user equipment into a normal small group in the second user equipment group, wherein there is a one-to-one correspondence between the normal small group and the single micro cell; or if the any user equipment is located at edges of at least two micro cells, classify the any user equipment into a particular small group corresponding to the at least two micro cells, wherein the particular small group is a small group other than the normal small group.

5.  The apparatus according to claim 4, wherein the user equipment grouping module further comprises:

    a small-group optimization module, configured to: after the small-group grouping module classifies the any user equipment into the particular small group corresponding to the at least two micro cells, if the particular small group comprises only one user equipment, classify the user equipment in the particular small group into a normal small group that corresponds to any micro cell of the at least two micro cells, and delete the particular small group.

6.  The apparatus according to any one of claims to 3 to 5, wherein the small-group optimization module is further configured to: after the small-group grouping module classifies the user equipment into the corresponding normal small group in the second user equipment group, if a unit small group comprising only one user equipment exists in the normal small group, classify the user equipment in the unit small group into the first user equipment group, and delete the unit small group.

7.  The apparatus according to any one of claims 2 to 6, wherein the uplink resource allocation module specifically comprises:

    a small-group resource allocation module, configured to: after the uplink resource allocation module allocates the uplink data transmission subframes to the user equipments in the first user equipment group and the user equipments in the second user equipment group, allocate, according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

8. The apparatus according to any one of claims 1 to 7, wherein the measurement report is obtained through measurement by the user equipment according to a measurement configuration and is reported by the user equipment, and the measurement configuration carries information about a first intra-frequency measurement report event and information about a second intra-frequency measurement report event; when a pilot signal of a micro cell corresponding to the user equipment becomes good, the micro cell triggers the first intra-frequency measurement report event; and when the pilot signal of a micro cell becomes poor, the micro cell triggers the second intra-frequency measurement report event.

9. The apparatus according to claim 8, wherein the user equipment grouping module is specifically configured to: if the measurement report reported by the user equipment is reported by means of triggering of the first intra-frequency measurement report event, classify the user equipment into the second user equipment group; or if the measurement report reported by the user equipment is reported by means of triggering of the second intra-frequency measurement report event, compare a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classify the user equipment into the second user equipment group; or when the quantity of corresponding micro cells that are before the user equipment performs measurement is equal to the quantity of micro cells that trigger the second intra-frequency measurement report event, classify the user equipment into the first user equipment group.

10. The apparatus according to any one of claims 1 to 9, wherein the user equipment grouping module is further configured to: before the user equipment is classified into the first user equipment group or the second user equipment group according to the measurement report reported by the user equipment, and before the measurement report that is reported by the user equipment for the first time is received, classify the user equipment into the first user equipment group.

11. The apparatus according to any one of claims 8 to 10, wherein the measurement report acquiring module is specifically configured to deliver the measurement configuration to the user equipment, and is further configured to receive the measurement report that is obtained through measurement by the user equipment based on the measurement configuration and that is reported when the micro cell corresponding to the user equipment triggers the first intra-frequency measurement report event or the second intra-frequency measurement report event.

12. The apparatus according to any one of claims 8 to 10, wherein the measurement report acquiring module is specifically configured to receive the measurement report, forwarded by a radio network controller, of the user equipment, wherein the measurement report is obtained through measurement by the user equipment according to the measurement configuration delivered by the radio network controller and is reported to the radio network controller when the micro cell corresponding to the user equipment triggers the first intra-frequency measurement report event or the second intra-frequency measurement report event.

13. A macro base station, comprising:

a receiver, configured to receive a measurement report reported by user equipment; and
a processor, configured to classify the user equipment into a first user equipment group or a second user equipment group according to the measurement report reported by the user equipment, wherein user equipment in the second user equipment group is located at an edge of a micro cell and is not located in a soft handover area, and a distance that is from the user equipment in the second user equipment group to the macro base station is longer than a distance that is from user equipment in the first user equipment group to the macro base station; and further configured to allocate, within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

14. The macro base station according to claim 13, wherein the processor is further configured to: after classifying the user equipment into the second user equipment group, separately determine, according to a measurement report reported by each user equipment in the second user equipment group, a micro cell corresponding to each user equipment, wherein each user equipment is located at an edge of one or more micro cells; and separately classify each user equipment into a corresponding small group in the second user equipment group according to the micro cell corresponding to each user equipment, wherein the micro cell corresponding to each user equipment corresponds to one small group in the group.

15. The macro base station according to claim 14, wherein the processor is specifically configured to separately classify each user equipment into a normal small group in the second user equipment group according to the micro cell corresponding to each user equipment, wherein there is a one-to-one correspondence between the normal small group and the micro cell corresponding to each user equipment.

16. The macro base station according to claim 14, wherein the processor is specifically configured to: if any user equipment in the second user equipment group is located at an edge of only a single micro cell, classify the any user equipment into a normal small group in the second user equipment group, wherein there is a one-to-one correspondence between the normal small group and the single micro cell; or if the any user equipment is located at edges of at least two micro cells, classify the any user equipment into a particular small group corresponding to the at least two micro cells, wherein the particular small group is a small group other than the normal small group.

17. The macro base station according to claim 16, wherein the processor is further configured to: after classifying the any user equipment into the particular small group corresponding to the at least two micro cells, if the particular small group comprises only one user equipment, classify the user equipment in the particular small group into a normal small group that corresponds to any micro cell of the at least two micro cells, and delete the particular small group.

18. The macro base station according to any one of claims to 15 to 17, wherein the processor is further configured to: after classifying the user equipment into the corresponding normal small group in the second user equipment group, if a unit small group comprising only one user equipment exists in the normal small group, classify the user equipment in the unit small group into the first user equipment group, and delete the unit small group.

19. The macro base station according to any one of claims to 14 to 18, wherein the processor is further configured to: after allocating the uplink data transmission subframes to the user equipments in the first user equipment group and the user equipments in the second user equipment group, allocate, according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

20. The macro base station according to any one of claims to 13 to 19, wherein the measurement report is obtained through measurement by the user equipment according to a measurement configuration and is reported by the user equipment, and the measurement configuration carries information about a first intra-frequency measurement report event and information about a second intra-frequency measurement report event; when a pilot signal of a micro cell corresponding to the user equipment becomes good, the micro cell triggers the first intra-frequency measurement report event; and when the pilot signal of the micro cell becomes poor, the micro cell triggers the second intra-frequency measurement report event.

21. The macro base station according to claim 20, wherein the processor is specifically configured to: if the measurement report reported by the user equipment is reported by means of triggering of the first intra-frequency measurement report event, classify the user equipment into the second user equipment group; or if the measurement report reported by the user equipment is reported by means of triggering of the second intra-frequency measurement report event, compare a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classify the user equipment into the second user equipment group; or when the quantity of corresponding micro cells that are before the user equipment performs measurement is equal to the quantity of micro cells that trigger the second intra-frequency measurement report event, classify the user equipment into the first user equipment group.

22. The macro base station according to claim 21, wherein the processor is further configured to: before the user equipment is classified into the first user equipment group or the second user equipment group according to the measurement report reported by the user equipment, and before the measurement report reported by the user equipment is received, classify the user equipment into the first user equipment group.

23. The macro base station according to any one of claims 21 to 22, wherein the macro base station further comprises:

a sender, configured to deliver the measurement configuration to the user equipment, so that the user equipment can perform measurement based on the measurement configuration, and report the measurement report when the micro cell corresponding to the user equipment triggers the first intra-frequency measurement report event or the second intra-frequency measurement report event.

24. The macro base station according to any one of claims 21 to 22, wherein the receiver is specifically configured to: before the user equipment is classified into the first user equipment group or the second user equipment group according to the measurement report reported by the user equipment, receive the measurement report, forwarded by a radio network controller, of the user equipment, wherein the measurement report is obtained through measurement by the user equipment according to the measurement configuration delivered by the radio network controller and is reported to the radio network controller when the micro cell corresponding to the user equipment triggers the first intra-frequency measurement report event or the second intra-frequency measurement report event.

25. A radio network controller, comprising:

a sender, configured to deliver a measurement configuration to user equipment, wherein the measurement configuration carries information about a first intra-frequency measurement report event and information about a second intra-frequency measurement report event, when a pilot signal of a micro cell corresponding to the user equipment becomes good, the micro cell triggers the first intra-frequency measurement report event, and when the pilot signal of the micro cell becomes poor, the micro cell triggers the second intra-frequency measurement report event; and further configured to forward, to a macro base station, a measurement report that is obtained through measurement by the user equipment according to the measurement configuration and that is reported by the user equipment; and
a receiver, configured to receive the measurement report.

26. User equipment, comprising:

a receiver, configured to receive a measurement configuration delivered from a network side, wherein the measurement configuration carries information about a first intra-frequency measurement report event and information about a second intra-frequency measurement report event, when a pilot signal of a micro cell corresponding to the user equipment becomes good, the micro cell triggers the first intra-frequency measurement report event, and when the pilot signal of the micro cell becomes poor, the micro cell triggers the second intra-frequency measurement report event; and
a sender, configured to: when measurement is performed according to the measurement configuration, and a micro cell triggers the first intra-frequency measurement report event and/or the second intra-frequency measurement report event, report a measurement report to the network side.

27. A method for allocating an uplink resource, comprising:

acquiring, by a macro base station, a measurement report reported by user equipment;
classifying, by the macro base station, the user equipment into a first user equipment group or a second user equipment group according to the measurement report, wherein interference of user equipment that is in the first user equipment group to a micro cell is less than interference of user equipment that is in the second user equipment group to the micro cell; and
allocating, by the macro base station within a scheduling period and based on a proportion of a quantity of user equipments in the first user equipment group to a quantity of user equipments in the second user equipment group, uplink data transmission subframes to the user equipments in the first user equipment group and the user equipments in the second user equipment group.

28. The method according to claim 27, wherein after the classifying, by the macro base station, the user equipment into a second user equipment group, the method further comprises:

separately determining, by the macro base station according to a measurement report reported by each user equipment in the second user equipment group, a micro cell corresponding to each user equipment, wherein each user equipment is located at an edge of one or more micro cells; and

separately classifying, by the macro base station, each user equipment into a corresponding small group in the second user equipment group according to the micro cell corresponding to each user equipment, wherein the micro cell corresponding to each user equipment corresponds to one small group in the group.

29. The method according to claim 28, wherein the separately classifying, by the macro base station, each user equipment into a small group in the second user equipment group according to the micro cell corresponding to each user equipment specifically comprises:

separately classifying, by the macro base station, each user equipment into a normal small group in the second user equipment group according to the micro cell corresponding to each user equipment, wherein there is a one-to-one correspondence between the normal small group and the micro cell corresponding to each user equipment.

30. The method according to claim 28, wherein the separately classifying, by the macro base station, each user equipment into a small group in the second user equipment group according to the micro cell corresponding to each user equipment specifically comprises:

if any user equipment in the second user equipment group is located at an edge of only a single micro cell, classifying, by the macro base station, the any user equipment into a normal small group in the second user equipment group, wherein there is a one-to-one correspondence between the normal small group and the single micro cell; or

if the any user equipment is located at edges of at least two micro cells, classifying, by the macro base station, the any user equipment into a particular small group corresponding to the at least two micro cells, wherein the particular small group is a small group other than the normal small group.

31. The method according to claim 30, wherein after the classifying, by the macro base station, the any user equipment into a particular small group in the second user equipment group, the method further comprises:

if the particular small group corresponding to the at least two micro cells comprises only one user equipment, classifying, by the macro base station, the user equipment in the particular small group into a normal small group that corresponds to any micro cell of the at least two micro cells, and deleting the particular small group.

32. The method according to any one of claims 29 to 31, wherein after the classifying, by the macro base station, the user equipment into a corresponding normal small group in the second user equipment group, the method further comprises:

if a unit small group comprising only one user equipment exists in the normal small group, classifying, by the macro base station, the user equipment in the unit small group into the first user equipment group, and deleting the unit small group.

33. The method according to any one of claims 28 to 32, wherein after the allocating, by the macro base station, uplink data transmission subframes to the user equipments in the first user equipment group and the user equipments in the second user equipment group, the method further comprises:

allocating, by the macro base station according to a proportion of a quantity of user equipments in each small group in the second user equipment group to the quantity of user equipments in the second user equipment group, uplink data transmission subframes that are allocated to the second user equipment group to the user equipment in each small group in the second user equipment group.

34. The method according to any one of claims 28 to 32, wherein the measurement report is obtained through measurement by the user equipment according to a measurement configuration and is reported by the user equipment, and the measurement configuration carries information about a first intra-frequency measurement report event and information about a second intra-frequency measurement report event; when a pilot signal of a micro cell corresponding to the user equipment becomes good, the micro cell triggers the first intra-frequency measurement report event; and when the pilot signal of the first micro cell becomes poor, the micro cell triggers the second intra-frequency measurement report event.

35. The method according to claim 34, wherein the classifying, by the macro base station, the user equipment into a first user equipment group or a second user equipment group according to the measurement report specifically comprises:

if the measurement report reported by the user equipment is reported by means of triggering of the first intra-frequency measurement report event, classifying, by the macro base station, the user equipment into the second user equipment group; or
if the measurement report reported by the user equipment is reported by means of triggering of the second intra-frequency measurement report event, comparing, by the macro base station, a quantity of corresponding micro cells that are before the user equipment performs measurement with a quantity of micro cells that trigger the second intra-frequency measurement report event; and when the quantity of corresponding micro cells that are before the user equipment performs measurement is greater than the quantity of micro cells that trigger the second intra-frequency measurement report event, classifying, by the macro base station, the user equipment into the second user equipment group; or when the quantity of corresponding micro cells that are before the user equipment performs measurement is equal to the quantity of micro cells that trigger the second intra-frequency measurement report event, classifying, by the macro base station, the user equipment into the first user equipment group.

36. The method according to any one of claims 27 to 35, wherein before the classifying, by the macro base station, the user equipment into a first user equipment group or a second user equipment group according to the measurement report reported by the user equipment, the method further comprises:

before acquiring the measurement report reported by the user equipment, classifying, by the macro base station, the user equipment into the first user equipment group.

37. The method according to any one of claims 34 to 36, wherein the acquiring, by a macro base station, a measurement report reported by user equipment comprises:

delivering, by the macro base station, the measurement configuration to the user equipment; and
receiving, by the macro base station, the measurement report that is obtained through measurement by the user equipment based on the measurement configuration and that is reported when the micro cell corresponding to the user equipment triggers the first intra-frequency measurement report event or the second intra-frequency measurement report event.

38. The method according to any one of claims 34 to 36, wherein the acquiring, by a macro base station, a measurement report reported by user equipment comprises:

receiving, by the macro base station, the measurement report, forwarded by a radio network controller, of the user equipment, wherein the measurement report is obtained through measurement by the user equipment according to the measurement configuration delivered by the radio network controller and is reported to the radio network controller when the micro cell corresponding to the user equipment triggers the first intra-frequency measurement report event or the second intra-frequency measurement report event.

FIG. 1

FIG. 2

FIG. 3

S401

A macro base station acquires a measurement report reported by user equipment

S402

The macro base station classifies the user equipment into a normal user equipment group or a high interference user equipment group according to the measurement report reported by the user equipment

S403

The macro base station allocates, within a scheduling period and based on a proportion of a quantity of user equipments in the normal user equipment group to a quantity of user equipments in the high interference user equipment group, uplink data transmission subframes to the user equipments in the normal user equipment group and the user equipments in the high interference user equipment group

FIG. 4

# INTERNATIONAL SEARCH REPORT

| International application No. |
| --- |
| PCT/CN2013/090466 |

## A. CLASSIFICATION OF SUBJECT MATTER

H04W 72/12 (2009.01) i

According to International Patent Classification (IPC) or to both national classification and IPC

## B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, CNKI, VEN: UE, interference, group, frame, uplink, measure report, same frequency, micro cell

## C. DOCUMENTS CONSIDERED TO BE RELEVANT

| Category* | Citation of document, with indication, where appropriate, of the relevant passages | Relevant to claim No. |
| --- | --- | --- |
| X | CN 102655681 A (POTEVIO INST TECHNOLOGY CO., LTD.) 05 September 2012 (05.09.2012) description, paragraphs [0019]-[0048] | 1, 13, 27 |
| A | CN 102655681 A (POTEVIO INST TECHNOLOGY CO., LTD.) 05 September 2012 (05.09.2012) the whole document | 2-12, 14-24, 28-38 |
| A | CN 102869039 A (HUAWEI TECHNOLOGIES CO., LTD.) 09 January 2013 (09.01.2013) the whole document | 1-38 |
| A | CN 103428776 A (HUAWEI TECHNOLOGIES CO., LTD.) 04 December 2013 (04.12.2013) the whole document | 1-38 |
| A | CN 102595531 A (TD TECH LTD) 18 July 2012 (18.07.2012) claims 1-17 | 25, 26 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 18 September 2014 | 10 October 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>FAN, Xiaohan<br><br>Telephone No. (86-10) 62089546 |

Form PCT/ISA/210 (second sheet) (July 2009)

**INTERNATIONAL SEARCH REPORT**
Information on patent family members

| | | International application No. |
|---|---|---|
| | | PCT/CN2013/090466 |

| Patent Documents referred in the Report | Publication Date | Patent Family | Publication Date |
|---|---|---|---|
| CN 102655681 A | 05 September 2012 | None | |
| CN 102869039 A | 09 January 2013 | None | |
| CN 103428776 A | 04 December 2013 | None | |
| CN 102595531 A | 18 July 2012 | None | |

Form PCT/ISA /210 (patent family annex) (July 2009)